(19) **Europäisches Patentamt / European Patent Office / Office européen des brevets**

(11) **EP 4 692 408 A1**

(12) # EUROPEAN PATENT APPLICATION
published in accordance with Art. 153(4) EPC

(43) Date of publication:
**11.02.2026 Bulletin 2026/07**

(21) Application number: **24814252.3**

(22) Date of filing: **21.05.2024**

(51) International Patent Classification (IPC):
**C22C 38/50** (2006.01)    **B32B 15/01** (2006.01)
**B32B 15/18** (2006.01)    **B21B 1/22** (2006.01)

(52) Cooperative Patent Classification (CPC):
**B21B 1/22; B21B 1/38; B21B 37/58; B21B 37/74;
B21B 47/00; B32B 15/01; B32B 15/18;
B32B 37/06; B32B 37/10; B32B 38/00; C21D 8/02;
C22C 38/02; C22C 38/04; C22C 38/06;
C22C 38/42;**      (Cont.)

(86) International application number:
**PCT/CN2024/094461**

(87) International publication number:
**WO 2024/245053 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 CN 202310604536**

(71) Applicant: **BAOSHAN IRON & STEEL CO., LTD.
Shanghai 201900 (CN)**

(72) Inventors:
- **HAO, Yingmin
 Shanghai 201900 (CN)**
- **JIAO, Sihai
 Shanghai 201900 (CN)**
- **YAN, Bo
 Shanghai 201900 (CN)**
- **XING, Zhao
 Shanghai 201900 (CN)**
- **LIANG, Xiaojun
 Shanghai 201900 (CN)**
- **KONG, Wei
 Shanghai 201900 (CN)**

(74) Representative: **Maiwald GmbH
Elisenhof
Elisenstraße 3
80335 München (DE)**

(54) **345 MPA-GRADE HOT-ROLLED STEEL PLATE FOR BUILDING STRUCTURES RESISTANT TO SEA WAVE SPLASH ZONE CORROSION AND MANUFACTURING METHOD THEREOF**

(57)     The present disclosure provides a hot-rolled steel plate for construction structures, comprising a base layer, a corrosion-resistant layer, and an interface transition layer located between the base layer and the corrosion-resistant layer. The hot-rolled steel plate of the present disclosure has a yield strength of $\geq$ 350 MPa, a tensile strength of $\geq$ 490 MPa, a yield-to-tensile ratio of 0.71-0.80, an impact energy at -40°C of $\geq$ 190 J, a sea wave splash corrosion resistance rate of $\leq$0.006 mm/year, an interface transition layer thickness of $\leq$ 10 $\mu$m, and an interfacial shear strength of $\geq$ 252 MPa, and can be used to manufacture structural components suitable for see wave splash zone environments. The present disclosure also provides a manufacturing method for the hot-rolled steel plate.

Figure 1

**(Cont. next page)**

EP 4 692 408 A1

(52) Cooperative Patent Classification (CPC): (Cont.)
     **C22C 38/48; C22C 38/50; C22F 1/18**

## Description

### TECHNICAL FIELD

The present disclosure relates to a steel for construction structures, in particular to a hot-rolled steel plate for construction structures that is resistant to sea wave splash zone corrosion, and to a manufacturing method thereof.

### BACKGROUND

The ocean is an extremely harsh and complex corrosive environment. Seawater is a strong electrolyte solution containing a high concentration of chloride ions. Steel facilities, which serve as the main structures of marine engineering installations, are highly susceptible to electrochemical reactions with the surrounding medium, leading to severe corrosion that significantly reduces the service life of these facilities. Particularly in the wave splash zone, the most corrosive area of the marine environment, various facilities are subjected to a series of external factors such as alternating dry and wet conditions, seawater spray, sunlight, corrosive components in the atmosphere, and oxygen, resulting in particularly severe material corrosion.

Surveys indicate that the corrosion of steel piles in facilities such as seaport terminals and offshore oil platforms is severe in the wave splash zone, generally 3-10 times that in the fully immersed zone. Once severe local corrosion damage occurs in this area, the bearing capacity of the entire facility is greatly reduced, its service life is shortened, production safety is affected, and it may even lead to premature decommissioning of the facility.

Since the wave splash zone is in the wet-dry alternate zone, where oxygen supply is abundant, the resulting corrosion products provide no protective effect on the steel substrate. As seawater spray can directly strike the metal surface, corrosion is severe. Corrosion tests and survey results indicate that, under general conditions, the average corrosion rate of ordinary carbon steel and low-alloy steel in the marine atmosphere is approximately 0.03-0.08 mm/year, while the average corrosion rate of these steels in the wave splash zone is about 0.3-0.5 mm/year. In the wave splash zone, steel is highly prone to severe corrosion damage, which significantly reduces the bearing capacity of the entire steel structure, affects safety in production, shortens service life, and leads to premature decommissioning.

Based on the aforementioned working conditions, industrial pure titanium is selected as the corrosion-resistant layer. Titanium exhibits high chemical activity and readily reacts with oxygen in the air to form oxides. The oxides on the titanium metal surface are dense, stable, and possesses a strong "self-healing" ability. The "self-healing" ability of titanium oxides primarily refers to the rapid formation of a new titanium oxide layer at any damaged area on the titanium surface, preventing further contact between the corrosive medium and the titanium.

For steels used in marine construction structures, in addition to meeting corrosion resistance requirements, it must also possess good mechanical properties. Among these, the yield-to-tensile ratio and low-temperature impact toughness have gradually become key indicators for construction steel. The yield-to-tensile ratio is the ratio of the yield strength to the tensile strength of the steel, and its value reflects the steel's ability to avoid strain concentration during plastic deformation. A lower yield-to-tensile ratio indicates that the plastic deformation of the steel can be more uniformly distributed over a wider area. In steel structures made of low-yield-to-tensile ratio steel, plastic deformation under seismic forces can be evenly distributed across a broader range. In contrast, materials with a high yield-to-tensile ratio may experience strain concentration, reducing the overall plastic deformation capacity of the steel, which can lead to brittle failure of the structure, resulting in structural failure and sudden collapse. Steel undergoes a brittle transition in low-temperature environments, where its fracture mode transitions from ductile fracture to brittle fracture. The engineering significance lies in ensuring that when steel serves at temperatures above this transition point, components will not experience brittle fracture. Therefore, structural steels often need to be adjusted in terms of low-temperature impact properties according to their service environment. Ocean temperatures vary significantly across different latitudes. Taking the Bohai Bay area in China as an example, coastal temperatures can drop to -20°C or less in winter. In such cases, construction materials are required to meet impact performance requirements at -40°C to prevent brittle fracture. If the increase in tensile strength is limited while plasticity and toughness are enhanced, the yield-to-tensile ratio will increase significantly, making it difficult to achieve a low yield-to-tensile ratio.

Chinese patent application CN201210260231.7 discloses a method for manufacturing a titanium-steel-titanium double-sided clad plate. The method involves stacking four titanium plates and three steel plates in a specific sequence within a sealed frame formed by welding the two outermost steel plates. An isolation agent, prepared by mixing 1 part by weight of active $\alpha$-Al$_2$O$_3$ and 1.5 parts by weight of a 4% aqueous polyvinyl alcohol solution, is added between the titanium plates. A nickel-based alloy is used as a transition layer between the titanium and steel plates. The assembly is heated to 500-630°C under vacuum, held for 1-2 hours, with a vacuum degree of 20-200 Pa. The characteristic of this method is that welding is performed first after slab assembly, followed by vacuum pumping. Conventional arc welding and submerged arc welding are sufficient for the welding process. Compared to vacuum welding, these methods reduce welding requirements, lower costs, and eliminate the need for additional vacuum chamber construction. The clad slab is then rolled and cladded in a conventional heating furnace at a rolling temperature of 700-900°C. By sealing and welding the outermost steel plates and applying vacuum, carbon (C) from the gas is blocked. Simultaneously, the nickel-based alloy isolation layer prevents the formation of interfacial TiC, resulting in a titanium-steel clad plate with a shear strength of 230-260 MPa and an interfacial bonding rate of 99.6-100%.

Chinese patent application CN201710769999.X discloses a method for manufacturing a titanium-steel clad plate. The method involves selecting the mutually contacting surfaces of the titanium-steel composite slab, applying a high-temperature anti-carburization and anti-nitridation isolation coating on the contacting titanium surface, and allowing it to dry at room temperature. After drying, the titanium slabs are aligned and stacked in pairs with a steel slab placed in between to complete the slab assembly and obtain a clad slab. The individual titanium slabs used have a thickness greater than 2 mm, and the steel slabs have a thickness greater than 5 mm. The periphery of the clad slab is then seam-welded while leaving an unwelded zone of a certain size. Vacuum is applied to the slab to achieve a pressure of $10^{-2}$-$10^{-3}$ Pa before welding. The slab is heated to 500-700°C and rolled with a first-pass reduction rate exceeding 25%, a final-pass reduction rate not exceeding 15%, a total reduction rate of 60-70%, and a rolling speed of 0.1-1.0 mm/s. The coating used in this application provides high-temperature anti-permeation protection, preventing diffusion and oxidation of other impurity elements at high temperatures and blocking the diffusion of elements such as C and N. In the examples, Q235 and TA1 are combined, and the produced steel plates achieve shear strengths of 176 MPa, 181 MPa, and 182 MPa.

The above two applications avoid the formation of brittle Ti compounds mainly by introducing an additional nickel-based alloy isolation layer between titanium and carbon steel.

Chinese patent application CN201811327623.4 discloses a titanium-steel-titanium clad plate and the manufacturing method thereof. The method involves fixing a carbon steel plate between two titanium plates of the same size, followed by warm cladding rolling using an irreversible rolling mill with high rolling force to integrally bond the three layers. After rolling, the clad plate undergoes heat treatment, including first annealing at 500-600°C for 20-60 minutes and recrystallization annealing at 680-700°C for 30-120 minutes. The final product is obtained through leveling, flattening, shearing, and shaping. This application primarily describes a method for manufacturing a clad titanium-steel plate without hot rolling cladding. Due to the use of an irreversible rolling mill, only single-pass rolling production is feasible, and heat treatment is additionally required. The examples mainly involve the manufacturing method of strip, while the performance after cladding is not mentioned.

Chinese patent application CN201510543767.3 discloses a method for manufacturing a titanium-steel clad plate, which yields a titanium-steel clad plate with high bonding strength. The application involves fixing a titanium plate between two plain carbon steel plates or slabs, welding the periphery of the slab in a vacuum environment, heating the composite slab to 850-900°C for 120-360 minutes, with the initial rolling temperature controlled to 800°C or more and the finish rolling temperature to 700°C or less, with each pass deformation controlled at 20-30% and a total rolling deformation of ≥ 90%. This high reduction rolling process aims to break up brittle phase compounds formed at the interface and reduce their impact on the bonding surface. The resulting titanium-steel clad plate achieves a bonding strength greater than 240 MPa. However, the application requires a high reduction rate per pass and a large total deformation, which tends to cause edge weld cracks during rolling. This compromises vacuum integrity and is detrimental to interfacial bonding.

Chinese patent application CN201610994234.1 discloses a manufacturing method for a titanium-steel clad plate, relating to an annealing technology manufacturing method for titanium-steel plates. First, titanium plates and steel plates are assembled into a symmetric multilayer composite slab with a structure of steel plate-titanium plate-isolation agent-titanium plate-steel plate, which is then cladded by rolling cladding or explosion cladding. The clad slab undergoes annealing and pickling, initially heated to 500-750°C to recrystallize the core titanium plate, and then heated to 950-1050°C to recrystallize the base steel plate. The purpose of this application is to simultaneously enhance the properties of both the clad material and base material through two-stage heat treatment. However, the two-stage heat treatment may cause excessive diffusion of titanium, iron, and carbon elements, leading to the formation of brittle intermetallic compounds such as iron-titanium and titanium carbide, which deteriorates the interfacial shear strength.

Chinese patent application CN201710996925.X discloses a thin cladding double-sided titanium-steel clad plate and the manufacturing method thereof. Through thick slab assembly and high reduction rolling technology, good bonding between titanium and steel is achieved. The application relates to a double-sided titanium clad plate composed of a titanium clad layer, a base layer, and another titanium clad layer. The titanium clad material is TA2 with a thickness of 0.2-1 mm. The slab is assembled by stacking, from top to bottom, in the order of cover plate, titanium clad material, carbon steel base material, titanium clad material, and cover plate. After vacuum extraction in a vacuum chamber, the peripheral gaps are sealed by vacuum electron beam welding under a vacuum degree of $1.0 \times 10^{-2}$ to $4.5 \times 10^{-2}$ Pa. The sealed clad slab is heated to 900-920°C and held for a duration calculated as 1 min/mm × total thickness of the clad slab. The initial rolling temperature is 880-900°C, the finishing rolling temperature is 800°C or more, and the slab is air-cooled to room temperature. The single-pass reduction rate is ≥ 15%, with the first three passes having a reduction rate of ≥ 20%, and the total reduction rate is ≥ 80%. The rolled clad plate is trimmed, separated, and surface-finished to obtain the double-sided titanium-steel clad plate. By employing surface cleaning of the clad slab, air-isolating encapsulation by the cover plate, controlling rolling temperature, and applying high reduction rates, the titanium-iron and titanium-carbon compounds formed at the clad interface are crushed, refined, and dispersed, improving the distribution of compounds and further ensuring bonding quality and performance stability. The shear strength reaches 241 MPa.

Chinese patent application CN201710983322.6 discloses a thin clad titanium-steel clad plate and the manufacturing method thereof. It adopts a double-layer structure composed of titanium and carbon steel, with slab assembly and heating processes similar to those in Chinese patent application CN201710996925.X. The initial rolling temperature is 880-900°C, the single-pass reduction rate is 25-30%, and the total reduction rate is ≥ 85%. While controlling the single-pass and total reduction rates, the thickness of the titanium-steel clad plate is limited to 3-16 mm, the finishing rolling temperature is 800°C or more, and the plate is air-cooled to room temperature. The titanium-steel clad plate is obtained through surface treatment, with the titanium clad thickness being ≤ 1 mm. This application improves the bonding quality by symmetrically assembling the slab and sealing the titanium within the carbon steel plate through welding. The shear strength of the rolled steel plate reaches 238 MPa or more, the interfacial bonding rate is 100%, and the carbon steel layer meets the national standard for Q345-grade carbon steel.

However, the above applications do not mention the detailed elemental composition or microstructural design of the clad layer or the base layer, but merely describes the tensile properties and shear strength. The cladding layer requires excessively high reduction rate per pass and total reduction rate, while failing to control performance indicators such as corrosion resistance of the material, low-temperature impact performance and yield-to-tensile ratio of the base material, etc. Accordingly, these steels do not meet the requirements for structural steels used in construction.

In summary, the above applications mainly describe methods for manufacturing clad steel plates, with specific examples in the descriptions providing only brief explanations on performance aspects such as interfacial shear strength and tensile properties. For structural steels used in sea wave splash zones, in addition to corrosion resistance against sea wave splash zones, it is essential to ensure necessary structural steel performance requirements, such as the aforementioned low yield-to-tensile ratio and corresponding low-temperature impact performance to guarantee structural safety. However, the above applications do not provide relevant compositional and process designs for corrosion rate, yield-to-tensile ratio, or low-temperature impact performance, etc., of the corrosion-resistant layer, thus failing to ensure that the steel plates meet the usage requirements for highly corrosion-resistant structural steel in sea wave splash zone environments.

## SUMMARY

One of the objects of the present disclosure is to provide a 345-MPa-grade hot-rolled steel plate for construction structures, preferably with a yield strength of ≥ 350 MPa, a tensile strength of ≥ 490 MPa, a yield-to-tensile ratio of 0.71-0.80, an impact energy at -40°C of ≥ 190 J, a sea wave splash corrosion resistance rate of ≤ 0.006 mm/year, an interface transition layer thickness of ≤ 10 $\mu$m, and an interfacial shear strength of ≥ 252 MPa. It can meet the corrosion resistance requirements for use in sea wave splash zone environments, while providing good mechanical properties against wave splash zone corrosion and high economic efficiency, making it suitable for use in steel structural components such as steel piles in facilities such as seaport terminals and offshore oil platforms.

The present disclosure adopts a low-carbon microalloyed composition design to achieve excellent bonding between titanium and carbon steel without the need for a metal isolation layer. Meanwhile, the thickness of the interface transition layer is controlled, ensuring that the mechanical properties of the base layer (carbon steel) meet the corresponding strength grade requirements without reducing the corrosion resistance of the corrosion-resistant layer itself, while also exhibiting an excellent yield-to-tensile ratio and low-temperature impact toughness.

Specifically, the hot-rolled steel plate for construction structures of the present disclosure comprises a base layer, a corrosion-resistant layer, and an interface transition layer located between the base layer and the corrosion-resistant layer;

wherein the base layer comprises the following chemical elements in percentage by mass in addition to Fe and other inevitable impurities: C 0.03-0.10%, Si 0.10-0.30%, Mn 1.00-1.50%, P 0.0005-0.003%, S 0.0005-0.01%, Cr 0.02-0.20%, Ni 0.01-0.10%, Cu 0.002-0.020%, Al 0.015-0.03%, Ti 0.008-0.018%, Nb 0.02-0.065%, N 0.0005-0.005%;
wherein the corrosion-resistant layer is an industrial pure titanium, with its composition meeting the standard GB/T 3620.1-2016 "Designation and composition of titanium and titanium alloys".

Preferably, the hot-rolled steel plate for construction structures has a yield strength of ≥ 350 MPa, a tensile strength of ≥ 490 MPa, a yield-to-tensile ratio of 0.71-0.80, an impact energy at -40°C of ≥ 190 J, a sea wave splash corrosion resistance rate of ≤ 0.006 mm/year, an interface transition layer thickness of ≤ 10 $\mu$m, and an interfacial shear strength of ≥ 252 MPa.

During the heating and rolling processes, atomic diffusion occurs at the interface between titanium and the carbon steel base layer, forming an interface transition layer between the two. In the present disclosure, the position in the carbon steel where the Fe content is reduced by 5% compared to the matrix is defined as the first boundary of the interface transition layer, and the position in the pure titanium layer where the Ti content is reduced by 5% compared to the matrix is defined as the second boundary of the interface transition layer. The distance from the first boundary to the second boundary is defined as the thickness of the interface transition layer.

Preferably, the chemical composition of the base layer further satisfies the following formula:

$$0.02\% \leq Cu + Ni \leq 0.20\%;$$

$$2(C + N) \leq Ti + Nb + Cr \leq 0.22\%;$$

wherein each chemical element in the formula represents the percentage by mass of the corresponding chemical element in the base layer.

Preferably, the base layer comprises the following chemical elements in percentage by mass: C 0.03-0.10%, Si 0.10-0.30%, Mn 1.00-1.50%, P 0.0005-0.003%, S 0.0005-0.01%, Cr 0.02-0.20%, Ni 0.01-0.10%, Cu 0.002-0.020%, Al 0.015-0.03%, Ti 0.008-0.018%, Nb 0.02-0.065%, N 0.0005-0.005%, the balance being Fe and other inevitable impurities.

Preferably, the base layer has a microstructure of ferrite + pearlite and/or a small amount of bainite structure, wherein a content of the pearlite is ≥ 5%, and the ferrite has an average grain size of ≥ grade 8.5; preferably, a content of the bainite structure is ≤ 10%. Unless otherwise specified, the content of each structure in the steel is expressed as volume fraction.

Preferably, in the base layer of the hot-rolled steel plate of the present disclosure, a ferrite volume fraction is 80%-90%, a pearlite volume fraction is 5%-10%, and a bainite volume fraction is 8% or less.

Preferably, the base layer of the present disclosure has a yield strength of ≥ 350 MPa, a tensile strength of ≥ 497 MPa, a yield-to-tensile ratio of 0.71-0.80, and an impact energy at -40°C of ≥ 190 J.

In the hot-rolled strip steel of the present disclosure, the thickness of the base layer accounts for 80% or more of the total thickness of the hot-rolled strip steel, and the mechanical properties of the final hot-rolled strip steel are mainly controlled by the carbon steel base layer.

Preferably, the corrosion-resistant layer adopts TA1, TA2, TA3, or TA4.

Preferably, the corrosion-resistant layer has a microstructure of single, equiaxed α-Ti.

Preferably, the corrosion-resistant layer has a sea wave splash corrosion resistance rate of ≤ 0.006 mm/year.

Preferably, the interface transition layer achieves 100% metallurgical bonding with atomic-level coherency; and/or the interface transition layer has a thickness of ≤ 10 μm, an interfacial shear strength of ≥ 252 MPa.

Preferably, the interface transition layer has fine grains with an average grain size of 15-50 μm and comprises (Ti, Nb)C precipitated particles with a size less than 120 nm.

Preferably, the hot-rolled steel plate for construction structures has a thickness of 3-80 mm.

In the base layer of the hot-rolled steel plate for construction structures of the present disclosure, the design principle of each chemical element is as follows:

C: C acts as a solid solution strengthening element in steel, significantly increasing the strength of the steel. However, excessively high C content adversely affects weldability and toughness. More importantly, when the C content is too high, it diffuses toward the clad interface, forming a large amount of coarse TiC hard phases in the interface transition layer, which reduces the clad interface strength. To ensure the interfacial shear strength, the present disclosure adopts a low C content. The variation in C content has a smaller effect on the yield strength of the steel than on tensile strength. Under the premise of ensuring formability and weldability of the product, appropriately increasing the C content is beneficial for reducing the yield-to-tensile ratio of the steel. Based on this, the C content in the composition of the base layer of the hot-rolled steel plate of the present disclosure is controlled to be 0.03-0.10%.

Si: The addition of Si element to steel can effectively deoxidize and improve steel purity. Additionally, Si element provides solid solution strengthening in steel, enhancing the strength and hardness of the steel. However, Si element adversely affects the weldability of the material. Therefore, the Si content in the composition of the base layer of the hot-rolled steel plate of the present disclosure is controlled to be 0.10-0.30%.

Mn: Mn is the most cost-effective matrix strengthening element. It can lower the austenite transformation temperature, delay pearlite transformation, refine ferrite grains, and improve the strength of steel. Meanwhile, Mn can also mitigate the adverse effects of S on steel. However, excessively high Mn content may lead to segregation bands and martensitic structures, which are detrimental to the toughness of steel. Therefore, the Mn content in the composition of the base layer of the hot-rolled steel plate of the present disclosure is controlled to be 1.00%-1.50%.

Al: Al is mainly added to the steel in excess as a deoxidizing element to minimize the O content in the steel. After deoxidation, the excess Al combines with N in the steel to form AlN precipitates. During heating, AlN inhibits the growth of austenite grains, refines the austenite grain structure, and enhances the strength and toughness of the matrix. Simultaneously, the formation of AlN fixes part of the N in the matrix, reducing the diffusion of interstitial N atoms from the carbon steel base layer to the clad interface, where it would otherwise form hard TiN in the interface transition layer and deteriorate the interfacial shear strength of the clad plate. Additionally, adding Al allows for an appropriate reduction in the required amount of Ti and Nb, lowering production costs. Based on this, the Al content in the composition of the base layer of the hot-rolled steel plate of the present disclosure is controlled to be 0.015-0.03%.

Ti: At high temperatures, Ti forms stable TiN or Ti(N, C), which fixes C and N, preventing the interstitial C and N atoms in the carbon steel base layer from diffusing toward the interface. Hard TiN or Ti(N, C) precipitates are formed in the interface transition layer, leading to a clad plate with high interfacial shear strength. Meanwhile, during heating, TiN inhibits austenite grain growth, refines austenite grains, and enhances the strength and toughness of the matrix. In subsequent welding processes, especially in the heat-affected zone (HAZ) adjacent to the weld fusion boundary, TiN suppresses austenite grain growth, thereby improving the toughness of the welded HAZ and meeting the requirements of welding processes with high heat input. Ti helps increase the strength of the low-carbon matrix, reduces the diffusion of C and N toward the interface, and results in a clad plate with high interfacial shear strength. Based on this, the Ti content in the composition of the base layer of the hot-rolled steel plate of the present disclosure is controlled to be 0.008-0.018%.

Nb: Nb exists in steel in the form of solid-soluble Nb and Nb(C, N), playing roles in solid solution drag and precipitation pinning during the recrystallization process. A small amount of Nb is added to the carbon steel base layer mainly to increase the recrystallization temperature, enabling grain refinement after rolling in the recrystallized and non-recrystallized regions, which helps improve the low-temperature impact toughness of the carbon steel base layer. Due to the formation of Nb(C, N) precipitates, the original austenite grains become finer, promoting the formation of even finer recrystallized grains and achieving an ideal combination of high strength and high toughness. Additionally, Nb fixes interstitial C and N atoms in the matrix, reducing the diffusion of C and N toward the interface, thereby contributing to the production of a clad plate with high interfacial shear strength. Based on this, the Nb content in the composition of the base layer of the hot-rolled steel plate of the present disclosure is controlled to be 0.02-0.065%.

Cu: Cu serves as a solid solution strengthening element. Moreover, as the Cu content increases, the impact toughness at room temperature of the steel slightly improves. Therefore, the Cu content in the composition of the base layer of the hot-rolled steel plate of the present disclosure is controlled to be 0.002-0.020%.

N: The N element can form second-phase particles with Ti and Al, refining austenite grains and enhancing the strength and toughness of the matrix. However, when the N content is too high, the amount of TiN formed increases, and the particles become excessively coarse, which adversely affects the plasticity and toughness of the carbon steel base layer. Based on this, the N content in the composition of the base layer of the hot-rolled steel plate of the present disclosure is controlled to be 0.0005-0.005%.

Ni: Ni is an element that stabilizes austenite and contributes to strength improvement to a certain extent. Adding Ni to steel significantly enhances the low-temperature impact toughness of steel. However, nickel is expensive, and excessive addition increases the cost of the clad plate. Based on this, an appropriate amount of Ni is added to the composition of the base layer of the hot-rolled steel plate of the present disclosure, with the Ni content controlled to be 0.01-0.10%.

Cr: Cr is a strong carbide-forming element with a relatively low diffusion rate in austenite, simultaneously hindering the diffusion of C element. It forms fine carbides during low-temperature processes, providing precipitation strengthening. At the same time, it fixes interstitial C and N atoms in the matrix, reducing the diffusion of C and N toward the interface, thereby resulting a clad plate with high interfacial shear strength. While Cr in steel enhances the strength of the matrix, it reduces toughness. To achieve the optimal balance of strength and toughness, the Cr content in the composition of the base layer n of the hot-rolled steel plate of the present disclosure is controlled to be 0.02-0.20%.

S and P are both inevitable impurity elements, and their contents should be as low as possible. Considering practical steelmaking processes, the S and P contents in the base layer of the hot-rolled steel plate of the present disclosure are controlled as follows: $0.0005\% \leq S \leq 0.010\%$; $0.0005\% \leq P \leq 0.003\%$.

The corrosion-resistant layer of the hot-rolled steel plate of the present disclosure adopts industrial pure titanium, preferably TA1, TA2, TA3, and TA4, with its composition meeting the standard GB/T 3620.1-2016 "Designation and composition of titanium and titanium alloys".

Additionally, in the chemical composition design of the base layer of the hot-rolled steel plate for construction structures of the present disclosure:
Both Cu and Ni can improve the toughness of the base layer, and their combined addition effect is especially significant. Moreover, the addition of Ni element can reduce the diffusion rate of C in steel, thereby decreasing the diffusion of C toward the interface. Therefore, in a preferred embodiment of the present disclosure, controlling $0.02\% \leq Cu + Ni \leq 0.20\%$ helps maintain the interface transition layer within 10 μm. An interface transition layer thickness exceeding 10 μm would have a detrimental impact on the cladding's tolerance.

Additionally, Ti, Nb, and Cr are all strong carbonitride-forming elements. They form corresponding carbonitrides in the carbon steel base layer, which can fix interstitial atoms in the base layer and hinder the diffusion of interstitial C and N atoms toward the interface. This prevents the formation of large, aggregated carbonitrides in the interface transition layer, helping to control the interface transition layer within 10 μm, thereby enhancing the interfacial shear strength. Meanwhile, Ti, Nb, and Cr can refine the grains of the carbon steel base layer and improve toughness at different stages of hot-rolling processing. Therefore, in a preferred embodiment of the present disclosure, the following control is applied: $2(C + N) \leq Ti + Nb + Cr \leq 0.22\%$.
wherein each chemical element in the formula represents the percentage by mass of the corresponding chemical element in the base layer.

On the other hand, the present disclosure provides a method for manufacturing the above hot-rolled steel plates for construction structures, comprising the following steps performed in sequence:

1) Smelting and Casting

Performing smelting and casting separately for the base layer and the corrosion-resistant layer based on the compositions of the base layer and the corrosion-resistant layer described above to produce slabs;

2) Slab Assembly

Performing surface grinding and polishing on the slabs of the base layer and the corrosion-resistant layer, bonding the base layer slab and the corrosion-resistant layer slab together, and welding and sealing the periphery of the bonded surfaces of the slabs to form a clad slab comprising the base layer and the corrosion-resistant layer; performing vacuum pumping treatment on the bonded surfaces after welding and sealing;

3) Heating

Heating the clad slab to 900-1000°C to form an interface transition layer between the base layer and the corrosion-resistant layer;

4) Rolling

Rolling the clad slab with a reduction rate per pass of 5-20%, a cumulative reduction rate of ≥ 70% and a finishing rolling temperature of 750-850°C to achieve full bonding between the base layer and the clad layer;

5) Cooling

After rolling, applying water cooling at a cooling rate of 5-20°C/s and a final cooling temperature of 300-650°C to produce a hot-rolled steel plate.
Preferably, in step 2), a thickness of the corrosion-resistant layer is 0.5-20% of the total thickness of the clad slab.
Preferably, in step 3), the interface transition layer formed between the base layer and the corrosion-resistant layer has a thickness of ≤10 μm. More preferably, the interface transition layer has a thickness of 0.5 μm or more.
Preferably, in step 4), a reduction rate per pass used during rolling is 10-20%.
In the manufacturing method of the present disclosure, the design principle for each process is as follows:

1) Smelting: P and S elements deteriorate the fracture toughness of steel. Therefore, during the smelting process, the contents of P and S are controlled at low levels to improve the quality of the slab. Clean steel production technology is adopted to reduce the gas and inclusion content in the steel, improving the comprehensive properties of the steel, especially enhancing resistance to lamellar tearing.
2) Assembly: The thickness of the corrosion-resistant layer is prepared to be 0.5-20% of the total thickness of the clad slab. Pretreatment is performed on the corrosion-resistant layer and the carbon steel base slab, followed by perimeter welding and sealing of the bonding surfaces of the slab. Vacuum pumping treatment is applied to the welded and sealed bonding interface. Vacuum treatment protects the surface of the corrosion-resistant layer from oxidation and is also an important condition to ensure the corrosion resistance of the clad steel plate in sea wave splash zone corrosion during service.

3) Heating: For the carbon steel base layer, the slab heating temperature is generally controlled at 1000-1250°C, which facilitates the dissolution and sufficient diffusion of precipitates in the steel, promotes element homogenization in the slab, and enables the strengthening effect of microalloying elements in the steel. For the clad industrial pure titanium plate, the heating temperature is generally controlled at 850-1000°C. Excessively high heating temperatures may induce $\beta$ phase transformation, and the $\beta$ phase can grow rapidly, deteriorating the properties of industrial pure titanium. Additionally, excessively high heating temperatures also promote full element diffusion, facilitating subsequent achievement of 100% metallurgical bonding at the interface. However, higher heating temperatures increase the tendency for austenite grain coarsening, add difficulty to subsequent controlled rolling, and most importantly, accelerate the diffusion of C, N, Ti, and Fe toward the interface, forming thick brittle precipitates and intermetallic compounds at the interface, resulting in a thick interface transition layer and deteriorating interfacial shear strength. Preferably, the heating temperature is set between 900-1000°C.

4) Rolling: Large deformation reduction is carried out in the high-temperature zone to ensure sufficient recrystallization of the microstructure, refining the grains and enhancing the strength and toughness of the material. The reduction rate per pass is 5-20%, and the cumulative reduction rate is $\geq$ 70%. Controlled rolling is performed in the non-recrystallization zone. In this stage, austenite recrystallization no longer occurs. By applying appropriate reduction rates and finishing rolling temperatures, deformation energy and dislocations are accumulated, forming high-density deformation bands within the austenite grains. This increases phase transformation nucleation sites, further refines the grain size after matrix phase transformation, and improves the strength and toughness of the material. Additionally, during this stage, strain-induced precipitation of carbonitrides of Nb, Ti, and Cr occurs, enhancing the strength of the matrix, inhibiting the diffusion of C toward the interface, and preventing the formation of excessively thick TiC at the interface, which would degrade interfacial shear strength. Preferably, the finishing rolling temperature is controlled at 750-850°C. This ensures the corrosion resistance of titanium while avoiding rolling the base layer in the two-phase zone, resulting in a ferrite + pearlite microstructure with an average grain size greater than grade 8.5 and/or a bainite structure content of $\leq$ 10%.

5) Cooling: The present disclosure achieves control over the type and size of the post-rolling microstructure by implementing controlled cooling with specific settings for the initial cooling temperature, final cooling temperature, and cooling rate. Excessively high cooling rates may lead to the formation of bainite and martensite structures. As the martensite phase is a low-toughness and high-yield-to-tensile-ratio structure, it is detrimental to the properties of the steel plate. Excessively slow cooling rates may result in the formation of a large amount of coarse ferrite structure. Coarse structures facilitate crack propagation, leading to a decline in impact performance. Therefore, the cooling rate should be appropriately controlled.

Controlling the finishing rolling temperature can prevent the formation of abnormally coarse microstructures caused by rolling in the two-phase zone. Simultaneously, rapid cooling after rolling to the phase transformation temperature further inhibits microstructure growth, enhancing material strength and low-temperature impact toughness through grain refinement. Preferably, water cooling is applied with a cooling rate controlled at 5-20°C/s and a final cooling temperature controlled at 300-650°C, ensuring the base layer exhibits a low yield-to-tensile ratio and high low-temperature impact toughness.

Preferably, an excessively thick corrosion-resistant layer may adversely affect the mechanical properties and production cost of the material, while an excessively thin layer may reduce corrosion resistance and service life of the material. Therefore, in the aforementioned assembly process, the corrosion-resistant layer is preferably 0.5-20% of the total thickness of the clad slab.

The present disclosure forms a corrosion-resistant layer resistant to corrosion in sea wave splash zones on the surface of the base layer, i.e., the carbon steel plate, through the combination of the corrosion-resistant layer and the base layer, combined with composition design, and thickness ratio optimization by using a rolling process. The resulting steel plate exhibits corrosion resistance in the wave splash zones, good mechanical properties, and high cost-effectiveness. This steel plate can be further processed into structural components for use as steel structural components in wave splash zone environments.

Compared to the prior arts, the present disclosure offers the following beneficial effects:

By adopting a low-carbon microalloyed composition design, the invention achieves excellent bonding between titanium and carbon steel without the need for additional metal isolation layers. Meanwhile, the thickness of the interface transition layer is controlled to ensure that the mechanical properties of the base layer (carbon steel) meet the requirements of the corresponding strength grade without reducing the corrosion resistance of the corrosion-resistant layer itself. Additionally, the base layer exhibits an excellent yield-to-tensile ratio and low-temperature impact toughness.

Additionally, by reducing the C content in the carbon steel base layer, the present disclosure reduces the formation of TiC compounds in the interface transition layer and the precipitation of carbonitrides in the base layer, thereby inhibiting grain growth and improving the low-temperature impact toughness of the base layer. On the other hand, the addition of microalloying elements in steel combined with an optimized rolling and cooling process addresses the issue of low material strength under low-carbon conditions. The resulting clad steel plate (hot-rolled steel plate) achieves a yield strength of $\geq$ 350 MPa, a tensile strength of $\geq$ 490 MPa, a yield-to-tensile ratio of 0.71-0.80, and an impact energy at -40°C of $\geq$ 190 J, all exceeding the performance requirements specified in the national standard GB/T 19879-2015 "Steel Plate for Construction Structure".

Chinese patent application CN201210260231.7 does not specify the heating temperature. It adds a nickel plate as an isolation layer between the clad and base layers to prevent the formation of interfacial TiC, achieving an interfacial bonding rate of 99.6-100% of the titanium-steel clad plate. In contrast, the present disclosure clearly defines the heating temperature of the clad slab as 900-1000°C. Through low-carbon and microalloying design, it reduces the addition of Ni, lowers production costs, and optimizes processes such as heating and rolling to form a transition layer structure of a certain thickness. This approach also minimizes the formation of brittle TiC phases in the interface transition layer and achieves 100% metallurgical bonding at the interface (complete metallurgical bonding).

Chinese patent application CN201710769999.X uses a slab heating temperature of 500-700°C and a total reduction rate of 60-70%. The produced steel plate has a maximum interfacial shear strength of 182 MPa. In contrast, the present disclosure fully considers the impact of high-temperature phase transformation of industrial pure titanium in the corrosion-resistant layer on corrosion resistance, while also controlling the strength and toughness of the carbon steel base layer. By combining a low-carbon microalloying design and an overall processing optimization, the heating temperature of the clad slab is set at 900-1000°C. At this temperature, no phase transformation occurs in the corrosion-resistant layer, and precipitates in the carbon steel base layer are fully dissolved. During controlled rolling, this refines the grains of the base layer, enhancing its strength and toughness. In combination with a total reduction rate of $\geq$ 70%, brittle phases at the interface are fractured, thereby improving the interfacial shear strength.

The above two applications primarily avoid the formation of brittle Ti compounds by adding an additional nickel-based alloy isolation layer between titanium and carbon steel. In contrast, the present disclosure achieves this through composition and process design without adding an isolation layer, and differs from the above two applications in both the assembly method and the material of the carbon steel base layer.

The process conditions of the present disclosure ensure both the original corrosion resistance of the industrial pure titanium in the corrosion-resistant layer and the mechanical properties of the base layer, addressing the issue where the traditional processing windows for titanium and carbon steel are too divergent to be balanced. Moreover, the present disclosure controls the sufficient diffusion of elements between the base layer and the corrosion-resistant layer to form an interface transition layer no greater than 10 $\mu$m. This layer features a fine-grained microstructure with an average grain size of 15-50 $\mu$m and contains (Ti, Nb)C precipitated particles smaller than 120 nm, which enhance the interfacial bonding performance and ensure an interfacial shear strength of $\geq$ 252 MPa, exceeding the 182 MPa interfacial shear strength achieved by the prior arts.

Chinese patent application CN201811327623.4 achieves cladding through warm rolling, followed by a two-stage heat treatment process including initial annealing at 500-600°C for 20-60 minutes and recrystallization annealing at 680-700°C for 30-120 minutes. This represents a method for manufacturing clad titanium-steel plates via non-hot-rolled cladding, which is entirely different from the manufacturing method of the present disclosure.

Chinese patent application CN201510543767.3 employs a heating temperature of 850-900°C, a finishing rolling temperature of 700°C or less, and controls the single-pass deformation rate at 20-30% with a total rolling deformation of $\geq$ 90%, resulting in a titanium-steel clad plate with a shear strength greater than 240 MPa. This solution requires high reduction rate per pass and a large total deformation, which easily cause edge weld cracking during rolling, disrupt vacuum integrity, hinder cladding, and lead to poor rolling stability. In contrast, the present disclosure controls the single-pass reduction rate at 5-20%, effectively preventing weld cracking during rolling, maintaining the internal vacuum of the slab, and significantly enhancing interfacial shear strength, and stability and success rate of rolling.

Chinese patent application CN201610994234.1 discloses a manufacturing method for titanium-steel plates using annealing technology. First, titanium plates and steel plates are assembled into a symmetric multilayer composite slab with a structure of steel plate-titanium plate-isolator-titanium plate-steel plate. Cladding is achieved through rolling cladding or explosive cladding. The clad slab undergoes annealing and pickling, initially heated to 500-750°C to recrystallize the core titanium plates, and then heated to 950-1050°C to recrystallize the base steel plates. The specific rolling process and the corrosion and structural properties of the resulting steel plate are not explicitly detailed. This method is significantly different from the manufacturing process of the present disclosure, which eliminates the need for two-stage heat treatment. Moreover, the two-stage heat treatment may cause excessive diffusion of titanium, iron, and carbon elements, leading to the formation of brittle intermetallic compounds such as iron-titanium and titanium carbide, which deteriorate interfacial shear strength.

Chinese patent application CN201710996925.X uses TA2 as the corrosion-resistant layer material, with a titanium clad thickness of 0.2-1 mm. The slab is heated to 900-920°C and held, with an initial rolling temperature of 880-900°C and a finishing rolling temperature of 800°C or more, followed by air cooling to room temperature, achieving a shear strength of 241 MPa. In the present disclosure, the heating temperature is 900-1000°C, the finishing rolling temperature is 750-850°C, and water cooling is applied at a controlled cooling rate of 5-20°C/s. This process enables the use of TA1, TA2, TA3, or TA4 as the corrosion-resistant layer, accounting for 0.5-20% of the total thickness (3-80 mm) of the hot-rolled plate, with an interfacial shear strength of $\geq$ 252 MPa.

Chinese patent application CN201710983322.6 employs a slab assembly method and heating process similar to those of Chinese patent application CN201710996925.X, with a single-pass reduction rate of 25-30% and a total reduction rate of $\geq$ 85%. While controlling the single-pass and total reduction rates, it limits the thickness of the titanium-steel clad plate to 3-16 mm, with a finishing rolling temperature of 800°C or more and air cooling to room temperature. The titanium-steel clad plate is obtained through surface treatment, with a titanium clad thickness of $\leq$ 1 mm. In the present disclosure, the single-pass reduction rate is 5-20%, ensuring rolling stability. There are also significant differences in the thickness of the corrosion-resistant layer and the total thickness of the clad steel plate.

In summary, the 345-MPa-grade hot-rolled steel plate for construction structures with corrosion resistance in the wave splash zone, as described in the present disclosure, addresses the inherent sore points of using stainless steel or carbon steel in wave splash zone environments. This 345-MPa-grade hot-rolled steel plate for construction structures with corrosion resistance in the wave splash zone can be effectively applied in the manufacturing of steel structural components used in wave splash zone environments (e.g., facilities such as seaport terminals and offshore oil platforms). It meets the requirements of these components for corrosion resistance and mechanical properties in the wave splash zone, significantly enhancing their applicability, safety, and durability, while delivering substantial economic and social benefits.

## BRIEF DESCRIPTION OF DRAWINGS

Fig. 1 is a schematic diagram of the interlayer structure of the hot-rolled steel plate for construction structures of the present disclosure.
Fig. 2 is another schematic diagram of the interlayer structure of the hot-rolled steel plate for construction structures of the present disclosure.
Fig. 3 is a microstructure photograph of the corrosion-resistant layer of the hot-rolled steel plate for construction structures in Example 3 of the present disclosure.
Fig. 4 is a scanning image of the interface transition layer of the hot-rolled steel plate for construction structures in Example 3 of the present disclosure.
Fig. 5 is a microstructure photograph of the base layer of the hot-rolled steel plate for construction structures in Example 3 of the present disclosure.

Reference signs:

1-Base layer, 2-Corrosion-resistant layer, 3-Interface transition layer.

## DETAILED DESCRIPTION

The technical solutions of the present disclosure will be described in further detail below in accordance with the Examples and drawings. It should be clarified that the following Examples are only intended to illustrate specific embodiments of the present disclosure and do not limit the scope of protection of the present disclosure in any way.

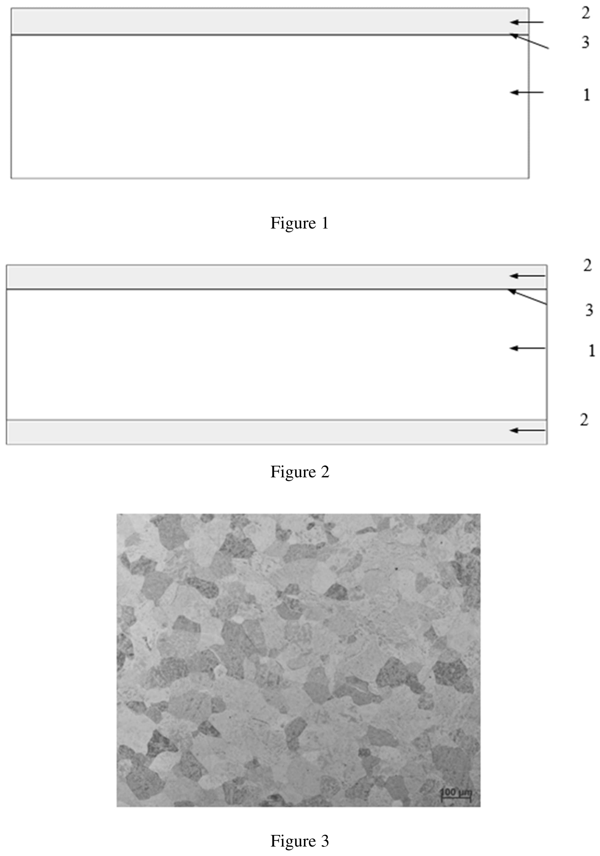

Referring to Fig. 1 and Fig. 2, schematic diagrams of two types of interlayer structures of the hot-rolled steel plate for construction structures of the present disclosure are shown, in which 1 represents the base layer, 2 represents the corrosion-resistant layer, and 3 represents the interface transition layer.

The composition of the base layer in the Examples of the hot-rolled steel plate (clad steel plate) for construction structures of the present disclosure is shown in Table 1, with the balance of the composition being Fe and other inevitable impurities. Table 2 provides the manufacturing process parameters for the Examples of the clad steel plate of the present disclosure and Comparative Examples. Table 3 shows the metallographic structure of the base layer, the mechanical properties of the hot-rolled steel plate, the thickness of the interface transition layer, and the shear strength in the Examples and Comparative Examples of the clad steel plate. The metallographic structure of the carbon steel consists of ferrite as the balance, in addition to pearlite and possibly a small amount of bainite. Taking the hot-rolled steel plate of Example 1 as an example, the volume fraction of ferrite is 95.0%.

Among them, the yield strength and tensile strength of the clad steel plate were measured in accordance with GB/T 6396-2008 "Clad Steel Plates-Mechanical and Technological Test" and GB/T 228-2010 "Metallic Materials - Tensile Testing at Room Temperature"; the impact energy at -40°C $KV_2$/J (longitudinal direction) was measured in accordance with GB/T 6396-2008 "Clad Steel Plates-Mechanical and Technological Test" and GB/T 229-2020 "Metallic Materials - Charpy Pendulum Impact Test Method"; the interfacial shear strength was measured in accordance with GB/T 6396-2008 "Clad Steel Plates-Mechanical and Technological Test".

The yield strength and tensile strength of the carbon steel base layer were measured in accordance with GB/T 6396-2008 "Clad Steel Plates-Mechanical and Technological Test" and GB/T 228-2010 "Metallic Materials - Tensile Testing at Room Temperature"; the impact energy at -40°C $KV_2$/J (longitudinal direction) was measured in accordance with GB/T 6396-2008 "Clad Steel Plates-Mechanical and Technological Test" and GB/T 229-2020 "Metallic Materials - Charpy

Pendulum Impact Test Method".

The grain size rating of ferrite in the carbon steel base layer was conducted as follows: The grain size of the ferrite microstructure in the carbon steel was rated using the intercept method in accordance with GB/T 6394-2017 "Determination of Estimating the Average Grain Size of Metal"

The Comparative Examples were manufactured using the steps as described above, which are essentially identical to those of the Examples of the present disclosure, with the differences lying in the composition of the carbon steel base layer and certain process parameters employed during the rolling or cooling steps that do not meet the requirements of the present disclosure.

Fig. 3 shows the metallographic structure of the corrosion-resistant layer in Example 3, displaying a single, equiaxed $\alpha$-Ti structure with an average grain size of 102.8 $\mu$m.

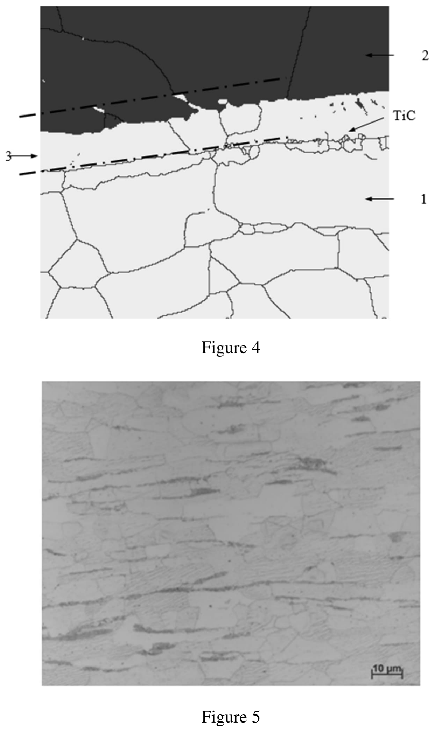

Fig. 4 shows the interface transition layer structure in Example 3. The interface transition layer 3 has a thickness of 7.5 $\mu$m, and the discontinuous fine particles are TiC with a size of less than 120 nm.

Fig. 5 shows the metallographic structure of the base layer in Example 3, indicating that the metallographic structure of the carbon steel base layer comprises ferrite + pearlite, with a pearlite volume fraction of 6.8% and a ferrite grain size grade of $\geq$ 8.5.

Table 4 shows the corrosion conditions after 6 months of exposure in the wave splash zone of the South China Sea of clad steel plates coupon specimens from Examples 1-8 and Comparative Examples 1-4. The corrosion test was conducted in accordance with GB/T 5776-2005 "Corrosion of Metals and Alloys-Guidelines for Exposure and Evaluating Metals and Alloys in Surface Seawater". In Table 4, the chloride ion concentration (%) represents the mass fraction of chloride ions relative to the total mass of the solution. For example, a 5% chloride ion concentration indicates that there are 5 grams of chloride ions in 100 grams of the solution. The observation results show that, except for Comparative Example 4, the corrosion rates of Examples and other Comparative Examples are $\leq$ 0.006 mm/year.

Comparative Examples 1-4 failed to meet certain performance requirements for the clad steel plate (i.e., performance parameters falling outside the range defined by the present disclosure) due to the use of composition designs or thermal processing conditions that do not meet the requirements. Specifically:

Comparative Example 1: Since no Ti, Nb, or Cr was added in the chemical composition, and the rolling reduction rate was outside the range defined by the present disclosure, the yield strength, yield-to-tensile ratio, impact performance, and interfacial shear strength failed to meet the requirements.

Comparative Example 2: Since no Ni was added in the chemical composition, and the finishing rolling temperature, cooling rate, and final cooling temperature were outside the ranges defined by the present disclosure, the yield-to-tensile ratio and impact performance failed to meet the requirements.

Comparative Example 3: Since the addition amount of Cu+Ni in its chemical composition was less than 0.02%, and the cooling rate and final cooling temperature were outside the ranges defined by the present disclosure, its metallographic structure was bainite, and the mechanical properties, yield-to-tensile ratio, and impact performance failed to meet the requirements.

Comparative Example 4: Since the heating temperature and finishing rolling temperature were outside the ranges defined by the present disclosure, the interface transition layer is too thick, resulting in insufficient shear strength. Due to the excessively high heating temperature, $\beta$-Ti cannot be completely eliminated during subsequent processing and cooling, leading to a high corrosion rate.

Through the technical solution of the present disclosure, the base layer of the steel plate exhibits an excellent yield-to-tensile ratio and low-temperature impact toughness, while the clad layer possesses outstanding corrosion resistance and high bonding strength. The hot-rolled steel plate achieves a yield strength of 352-445 MPa, a tensile strength of 497-602 MPa, a yield-to-tensile ratio of 0.71-0.80, an impact energy at -40°C of 190 J or more, and an interfacial shear strength greater than 252 MPa. The manufacturing method of the present disclosure, particularly the control of heating, rolling, and cooling processes, also contributes to achieving the corresponding steel properties.

It should be noted that all technical features described in the present disclosure may be freely combined or incorporated in any manner, unless they contradict each other. Various modifications and variations to the present disclosure may be made without departing from the scope of the present disclosure, which will be obvious to those skilled in the art. For example, features shown or described as part of one embodiment may be used with another embodiment to yield a further embodiment. Accordingly, the present disclosure is intended to cover such modifications falling within the scope of the appended claims and their equivalents.

Table 1 unit: percentage by mass)

|  | C | Si | Mn | Al | Ti | Nb | Cu | N | Ni | Cr | Corrosion-resistant layer material |
|---|---|---|---|---|---|---|---|---|---|---|---|
| Example 1 | 0.03 | 0.17 | 1.22 | 0.016 | 0.0080 | 0.020 | 0.019 | 0.0028 | 0.09 | 0.192 | TA4 |
| Example 2 | 0.05 | 0.12 | 1.36 | 0.015 | 0.0092 | 0.027 | 0.020 | 0.0034 | 0.07 | 0.147 | TA2 |
| Example 3 | 0.04 | 0.15 | 1.13 | 0.019 | 0.0123 | 0.029 | 0.018 | 0.0042 | 0.01 | 0.158 | TA2 |
| Example 4 | 0.06 | 0.29 | 1.32 | 0.018 | 0.0103 | 0.061 | 0.013 | 0.0038 | 0.08 | 0.027 | TA3 |
| Example 5 | 0.09 | 0.20 | 1.14 | 0.026 | 0.0089 | 0.021 | 0.015 | 0.0010 | 0.06 | 0.17 | TA4 |
| Example 6 | 0.07 | 0.19 | 1.48 | 0.021 | 0.0134 | 0.041 | 0.003 | 0.0006 | 0.02 | 0.165 | TA1 |
| Example 7 | 0.08 | 0.28 | 1.16 | 0.025 | 0.0176 | 0.034 | 0.005 | 0.0008 | 0.04 | 0.099 | TA1 |
| Example 8 | 0.10 | 0.23 | 1.08 | 0.030 | 0.0115 | 0.064 | 0.008 | 0.0005 | 0.03 | 0.124 | TA2 |
| Comparative Example 1 | 0.06 | 0.18 | 1.27 | 0.018 | - | - | 0.012 | 0.0003 | 0.05 | - | TA2 |
| Comparative Example 2 | 0.04 | 0.13 | 1.16 | 0.240 | 0.0093 | 0.054 | 0.002 | 0.0004 | - | 0.09 | TA1 |
| Comparative Example 3 | 0.09 | 0.25 | 1.45 | 0.017 | 0.0105 | 0.025 | - | 0.068 | 0.01 | 0.12 | TA3 |
| Comparative Example 4 | 0.05 | 0.13 | 1.15 | 0.020 | 0.0128 | 0.029 | 0.014 | 0.0031 | 0.05 | 0.14 | TA4 |

Table 2

| | Clad slab thickness/ mm | Heating temperature/ °C | Reduction rate per pass/% | Finishing rolling temperature/ °C | Cooling rate °C/s | Final cooling temperature/ °C | Finished product thickness s /mm | Corrosion-resistant layer thickness /mm |
|---|---|---|---|---|---|---|---|---|
| Example 1 | 300 | 920 | 13 | 826 | 12 | 348 | 45 | 2.3 |
| Example 2 | 520 | 905 | 20 | 848 | 8 | 312 | 79 | 0.4 |
| Example 3 | 315 | 935 | 19 | 839 | 10 | 429 | 40 | 3.6 |
| Example 4 | 230 | 953 | 14 | 797 | 18 | 584 | 8 | 1.2 |
| Example 5 | 295 | 989 | 10 | 765 | 20 | 532 | 24 | 4.8 |
| Example 6 | 180 | 911 | 5 | 816 | 15 | 612 | 3 | 0.5 |
| Example 7 | 210 | 942 | 12 | 762 | 5 | 648 | 30 | 2.1 |
| Example 8 | 200 | 968 | 8 | 781 | 12 | 486 | 15 | 2.4 |
| Comparative Example 1 | 205 | 956 | 3 | 843 | 15 | 605 | 30 | 1.5 |
| Comparative Example 2 | 285 | 946 | 9 | 878 | 3 | 711 | 42 | 3.4 |
| Comparative Example 3 | 345 | 981 | 11 | 825 | 25 | 268 | 28 | 4.5 |
| Comparative Example 4 | 325 | 1100 | 16 | 920 | 15 | 690 | 68 | 7.5 |

Table 3

| | Base layer | | | Hot-rolled steel plate | | | | | | | | Interface transition layer | |
|---|---|---|---|---|---|---|---|---|---|---|---|---|---|
| | | | | Yield strength /MPa | | Tensile strength /MPa | | Yield-to-tensile ratio | | Impact energy at -40°C $KV_2$/J (longitudinal) | Interface transition layer thickness $\mu$m | Shear strength MPa |
| | Metallographic structure | Ferrite grain size grade | Pearlite content volume % | Transverse | Longitudinal | Transverse | Longitudinal | Transverse | Longitudinal | | | |
| Example 1 | Ferrite + pearlite | 9 | 5.0 | 373 | 362 | 514 | 503 | 0.73 | 0.72 | 201 | 8.8 | 286 |
| Example 2 | Ferrite + pearlite | 8.5 | 5.6 | 368 | 352 | 501 | 497 | 0.73 | 0.71 | 232 | 9.4 | 275 |
| Example 3 | Ferrite + pearlite | 8.5 | 6.8 | 401 | 381 | 546 | 524 | 0.73 | 0.73 | 215 | 7.5 | 252 |
| Example 4 | Ferrite + pearlite + 4.2% bainite | 10 | 7.6 | 438 | 412 | 601 | 582 | 0.73 | 0.71 | 192 | 8 | 265 |
| Example 5 | Ferrite + pearlite + 8.5% bainite | 9 | 8.1 | 423 | 398 | 587 | 568 | 0.72 | 0.70 | 208 | 9 | 271 |

| | | | | | | | | | | | |
|---|---|---|---|---|---|---|---|---|---|---|---|
| Example 6 | Ferrite + pearlite | 9 | 9.2 | 394 | 381 | 558 | 531 | 0.71 | 0.72 | 202 | 8.3 | 256 |
| Example 7 | Ferrite + pearlite | 10 | 8.4 | 474 | 456 | 602 | 581 | 0.79 | 0.78 | 197 | 7.8 | 263 |
| Example 8 | Ferrite + pearlite | 8.5 | 10.0 | 432 | 418 | 597 | 572 | 0.72 | 0.73 | 206 | 8.5 | 271 |
| Comparative Example 1 | Ferrite + pearlite | 6 | 7.8 | 323 | 312 | 423 | 422 | 0.76 | 0.74 | 127 | 8 | 102 |
| Comparative Example 2 | Ferrite + pearlite | 9 | 6.4 | 366 | 346 | 478 | 476 | 0.77 | 0.73 | 85 | 8 | 201 |
| Comparative Example 3 | 100% bainite | 9 | 8.4 | 498 | 496 | 620 | 605 | 0.80 | 0.82 | 95 | 7 | 229 |
| Comparative Example 4 | Ferrite + pearlite + 7.8% bainite | 8 | 7.5 | 391 | 383 | 524 | 521 | 0.75 | 0.74 | 196 | 16 | 65 |

Table 4

| | Scene 1 | Scene 2 | Scene 3 | Scene 4 | Scene 5 | Scene 6 | Scene 7 | Scene 8 |
|---|---|---|---|---|---|---|---|---|
| Chloride ion concentration | 2.2 | 39.8 | 29.7 | 30.4 | 1.6 | 33.6 | 13.3 | 19.1 |
| Temperature (°C) | 38 | 23 | 41 | 45 | 24 | 42 | 33 | 26 |
| Corrosion rate (mm/year) | | | | | | | | |
| Example 1 | 0.002 | 0.003 | 0.005 | 0.006 | 0.002 | 0.005 | 0.003 | 0.001 |
| Example 2 | 0.001 | 0.003 | 0.006 | 0.005 | 0.002 | 0.006 | 0.003 | 0.002 |
| Example 3 | 0.002 | 0.004 | 0.004 | 0.006 | 0.002 | 0.005 | 0.002 | 0.002 |
| Example 4 | 0.001 | 0.002 | 0.004 | 0.006 | 0.001 | 0.006 | 0.002 | 0.002 |
| Example 5 | 0.002 | 0.003 | 0.005 | 0.006 | 0.001 | 0.006 | 0.002 | 0.003 |
| Example 6 | 0.001 | 0.002 | 0.003 | 0.005 | 0.001 | 0.005 | 0.002 | 0.002 |
| Example 7 | 0.002 | 0.003 | 0.004 | 0.006 | 0.001 | 0.005 | 0.003 | 0.002 |
| Example 8 | 0.002 | 0.004 | 0.005 | 0.005 | 0.002 | 0.006 | 0.002 | 0.003 |
| Comparative Example 1 | 0.002 | 0.003 | 0.004 | 0.006 | 0.002 | 0.007 | 0.002 | 0.003 |
| Comparative Example 2 | 0.002 | 0.004 | 0.005 | 0.006 | 0.002 | 0.007 | 0.003 | 0.003 |
| Comparative Example 3 | 0.002 | 0.004 | 0.005 | 0.007 | 0.002 | 0.007 | 0.003 | 0.003 |
| Comparative Example 4 | 0.004 | 0.011 | 0.006 | 0.009 | 0.010 | 0.007 | 0.003 | 0.006 |

**Claims**

1. A hot-rolled steel plate for construction structures, **characterized in that** the hot-rolled steel plate comprises a base layer, a corrosion-resistant layer, and an interface transition layer located between the base layer and the corrosion-resistant layer;

   wherein the base layer comprises the following chemical elements in percentage by mass in addition to Fe and other inevitable impurities: C 0.03-0.10%, Si 0.10-0.30%, Mn 1.00-1.50%, P 0.0005-0.003%, S 0.0005-0.01%, Cr 0.02-0.20%, Ni 0.01-0.10%, Cu 0.002-0.020%, Al 0.015-0.03%, Ti 0.008-0.018%, Nb 0.02-0.065%, N 0.0005-0.005%;
   wherein the corrosion-resistant layer is an industrial pure titanium, preferably TA1, TA2, TA3, or TA4.

2. The hot-rolled steel plate for construction structures according to claim 1, **characterized in that** the chemical composition of the base layer further satisfies the following formula:

$$0.02\% \leq \text{Cu} + \text{Ni} \leq 0.20\%;$$

$$2(\text{C} + \text{N}) \leq \text{Ti} + \text{Nb} + \text{Cr} \leq 0.22\%;$$

wherein each chemical element in the formula represents the percentage by mass of the corresponding chemical element in the base layer.

3. The hot-rolled steel plate for construction structures according to claim 1 or 2, **characterized in that** the base layer comprises the following chemical elements in percentage by mass: C 0.03-0.10%, Si 0.10-0.30%, Mn 1.00-1.50%, P 0.0005-0.003%, S 0.0005-0.01%, Cr 0.02-0.20%, Ni 0.01-0.10%, Cu 0.002-0.020%, Al 0.015-0.03%, Ti 0.008-0.018%, Nb 0.02-0.065%, N 0.0005-0.005%, with the balance being Fe and other inevitable impurities.

4. The hot-rolled steel plate for construction structures according to any one of claims 1-3, **characterized in that** the base layer has a microstructure of ferrite + pearlite and/or bainite structure, wherein a content of the pearlite is $\geq 5\%$, and the ferrite has an average grain size of $\geq$ grade 8.5; preferably, a content of the bainite structure is $\leq 10\%$.

5. The hot-rolled steel plate for construction structures according to any one of claims 1-4, **characterized in that** the base layer has a yield strength of $\geq 350$ MPa, a tensile strength of $\geq 497$ MPa, a yield-to-tensile ratio of 0.71-0.80, and an impact energy at -40°C of $\geq 190$ J.

6. The hot-rolled steel plate for construction structures according to claim 1, **characterized in that** the corrosion-resistant layer has a microstructure of single, equiaxed $\alpha$-Ti.

7. The hot-rolled steel plate for construction structures according to claim 1 or 6, **characterized in that** the corrosion-resistant layer has a sea wave splash corrosion resistance rate of $\leq 0.006$ mm/year.

8. The hot-rolled steel plate for construction structures according to claim 1, **characterized in that** the interface transition layer has a thickness of 0.5-10 $\mu$m, an average grain size of 15-50 $\mu$m, and comprises (Ti, Nb)C precipitated particles with a size less than 120 nm.

9. The hot-rolled steel plate for construction structures according to claim 1, **characterized in that** the hot-rolled steel plate for construction structures has a thickness of 3-80 mm.

10. The hot-rolled steel plate for construction structures according to any one of claims 1-9, **characterized in that** the hot-rolled steel plate has a yield strength of $\geq 350$ MPa, a tensile strength of $\geq 490$ MPa, a yield-to-tensile ratio of 0.71-0.80, an impact energy at -40°C of $\geq 190$ J, a sea wave splash corrosion resistance rate of $\leq 0.006$ mm/year, an interface transition layer thickness of 0.5-10 $\mu$m, and an interfacial shear strength of $\geq 252$ MPa.

11. A method for manufacturing the hot-rolled steel plate for construction structures according to any one of claims 1-10, **characterized in that** the method comprises the following steps performed in sequence:

> 1) smelting and casting
> performing smelting and casting separately for the base layer and the corrosion-resistant layer based on the compositions of the base layer and the corrosion-resistant layer according to claim 1, 2, or 3, to produce slabs;
> 2) slab assembly
> performing surface grinding and polishing on the slabs of the base layer and the corrosion-resistant layer, bonding the base layer slab and the corrosion-resistant layer slab together, and welding and sealing the periphery of the bonded surfaces of the slabs to form a clad slab comprising the base layer and the corrosion-resistant layer; performing vacuum pumping treatment on the bonded surfaces after welding and sealing;
> 3) heating
> heating the clad slab to 900-1000°C to form an interface transition layer between the base layer and the corrosion-resistant layer;
> 4) rolling
> rolling the clad slab with a reduction rate per pass of 5-20%, preferably a reduction rate per pass of 10-20%; a cumulative reduction rate of ≥ 70% and a finishing rolling temperature of 750-850°C;

5) cooling

after rolling, applying water cooling at a cooling rate controlled to be 5-20°C /s and a final cooling temperature controlled to be 300-650°C to produce a hot-rolled steel plate.

12. The method according to claim 11, **characterized in that** in step 2), a thickness of the corrosion-resistant layer is 0.5-20% of the thickness of the clad slab; and/or in step 3), the interface transition layer formed between the base layer and the corrosion-resistant layer has a thickness of 0.5-10 $\mu$m.

Figure 1

Figure 2

Figure 3

Figure 4

Figure 5

## INTERNATIONAL SEARCH REPORT

| International application No. |
| --- |
| **PCT/CN2024/094461** |

**A. CLASSIFICATION OF SUBJECT MATTER**

C22C38/50(2006.01)i; B32B15/01(2006.01)i; B32B15/18(2006.01)i; B21B1/22(2006.01)i

According to International Patent Classification (IPC) or to both national classification and IPC

**B. FIELDS SEARCHED**

Minimum documentation searched (classification system followed by classification symbols)

IPC: C22C, B32B, B21B

Documentation searched other than minimum documentation to the extent that such documents are included in the fields searched

Electronic data base consulted during the international search (name of data base and, where practicable, search terms used)

CNKI, CNABS, DWPI: 热轧, 钢, 基层, 过渡层, 铬, 镍, 铜, 钛, 铌, 氮, 铁素体, 珠光体, 贝氏体, 粒度, 强度, 冲击功, 耐腐蚀, 组坯, 压下率, 冷却, 厚度, hot rolled, steel, base layer, transition layer, chromium, nickel, copper, titanium, niobium, nitrogen, ferrite, pearlite, bainite, grain size, strength, impact work, corrosion resistance, billet, reduction rate, cooling, thickness

**C. DOCUMENTS CONSIDERED TO BE RELEVANT**

| Category* | Citation of document, with indication, where appropriate, of the relevant passages | Relevant to claim No. |
| --- | --- | --- |
| Y | CN 113106327 A (BAOSHAN IRON & STEEL CO., LTD.) 13 July 2021 (2021-07-13) claims 1-12, description, paragraphs 30-60, and table 1 | 1-12 |
| Y | JP 2018024905 A (JFE STEEL CORP.) 15 February 2018 (2018-02-15) description, paragraphs 41, 47, and 63-64 | 1-12 |
| Y | CN 107419078 A (SHANGHAI MEISHAN IRON & STEEL CO., LTD.) 01 December 2017 (2017-12-01) claims 1-5 | 1-12 |
| Y | CN 108118240 A (BAOSHAN IRON & STEEL CO., LTD.) 05 June 2018 (2018-06-05) claims 1-7 | 1-12 |
| A | CN 109628836 A (UNIVERSITY OF SCIENCE AND TECHNOLOGY BEIJING) 16 April 2019 (2019-04-16) entire document | 1-12 |
| A | CN 116145034 A (NANJING IRON & STEEL CO., LTD.) 23 May 2023 (2023-05-23) entire document | 1-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 July 2024** | **24 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094461**

| Patent document cited in search report | | | Publication date (day/month/year) | Patent family member(s) | | | Publication date (day/month/year) |
|---|---|---|---|---|---|---|---|
| CN | 113106327 | A | 13 July 2021 | None | | | |
| JP | 2018024905 | A | 15 February 2018 | JP | 6536514 | B2 | 03 July 2019 |
| CN | 107419078 | A | 01 December 2017 | None | | | |
| CN | 108118240 | A | 05 June 2018 | None | | | |
| CN | 109628836 | A | 16 April 2019 | None | | | |
| CN | 116145034 | A | 23 May 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210260231
- CN 201710769999X
- CN 201811327623
- CN 201510543767
- CN 201610994234
- CN 201710996925X
- CN 201710983322